# EUROPÄISCHE PATENTSCHRIFT

(11) **EP 1 284 274 B1**
(45) Veröffentlichungstag und Bekanntmachung des Hinweises auf die Patenterteilung: **18.04.2007**
(21) Anmeldenummer: 02016348.1
(22) Anmeldetag: 25.07.2002
(51) Int. Cl.: C08F 8/28, C08F 8/12

(54) **Polyvinylacetale mit verbesserter Haftung**
Polyvinyl acetals with improved adhesion
Polyvinylacétals ayant une adhésion améliorée

(30) Priorität: 16.08.2001 DE 10140130
(43) Veröffentlichungstag der Anmeldung: 19.02.2003
(73) Patentinhaber: Wacker Polymer Systems GmbH & Co. KG, 84489 Burghausen (DE)
(72) Erfinder: Stark, Kurt, Dr., 84508 Burgkirchen (DE); Glaser, Bernhard, Dr., 85457 Wörth (DE); Bauer, Werner, Dr., 84543 Winhöring (DE); Tschirner, Peter, Dr., 84547 Emmerting (DE)
(74) Vertreter: Schuderer, Michael

(56) Entgegenhaltungen:
- EP-A- 0 032 724
- EP-A- 0 535 643
- EP-A- 0 594 026
- BE-A- 657 268
- DE-A- 19 641 064
- US-A- 5 118 751
- US-A- 5 567 750

## Beschreibung

Die Erfindung betrifft niedermolekulare Polyvinylacetale mit verbesserter Haftung, Verfahren zu deren Herstellung sowie deren Verwendung.

Die Herstellung von Polyvinylacetalen, die aus den entsprechenden Polyvinylalkoholen durch polymeranaloge Umsetzung mit den entsprechenden Aldehyden erhalten werden, ist bereits seit 1924 bekannt, wobei in der Folgezeit eine Vielzahl von Aldehyden zur Herstellung der entsprechenden Polyvinylacetale eingesetzt worden sind. Polyvinylacetale werden in einem 3-Stufenprozeß (Polyvinylacetat -> Polyvinylalkohol -> Polyvinylacetal) hergestellt, wobei Produkte resultieren, welche neben Vinylacetalgruppen noch Vinylalkohol- und Vinylacetat-Einheiten enthalten. Kommerzielle Bedeutung haben vor allem Polyvinylformal, Polyvinylacetacetal und Polyvinylbutyral (PVB) erlangt. Im folgenden werden unter modifizierten Polyvinylacetalen solche verstanden, welche neben den genannten drei Einheiten, Vinylacetat, Vinylalkohol und Vinylacetal, noch weitere Monomereinheiten enthalten.

Der größte Anwendungsbereich für Polyvinylacetale ist die Herstellung von Sicherheitsgläsern im Automobilbau und in der Architektur, wobei weichgemachte Polyvinylbutyral-Folien als Zwischenschicht in Glasscheiben eingesetzt werden. Für diesen Einsatzzweck werden auch Gemische mit modifizierten Polyvinylbutyralen vorgeschlagen, beispielsweise mit den in der EP-A 368832 beschriebenen mit Sulfonat-, Carboxylat- und Phosphatfunktionellen Acetaleinheiten, welche sich durch verbessertes Block- und Fließverhalten auszeichnen. Aus der EP-A 634447 sind modifizierte Polyvinylbutyrale bekannt, welche in der Polymerhauptkette Sulfonatgruppen-haltige Monomereinheiten enthalten, und durch Acetalisierung von Sulfonat-funktionellen Polyvinylakoholen zugänglich werden.

Mit Aminogruppen modifizierte Polyvinylbutyrale sind aus der EP-A 461399 bekannt. Diese werden als Fällungsmittel eingesetzt. Ein weiteres Einsatzgebiet für Polyvinylbutyrale ist die Verwendung in korrosionsschützenden Beschichtungen, was zum Beispiel aus der EP-A 1055686 zu entnehmen ist, wobei mit tertiären Alkanolaminen modifizierte Polyvinylacetale zum Einsatz kommen.

Unter anderem aufgrund ihrer guten Pigment-Bindekraft werden Polyvinylbutyrale auch als Bindemittel in Lacken und speziell in Druckfarben eingesetzt. In dieser Anwendung wird die Anforderung gestellt, dass die organischen Lösungen der Polyvinylbutyrale möglichst niedrige Lösungsviskosität aufweisen sollen, um damit Farben mit hohem Feststoffgehalt bei möglichst hohem Bindemittelanteil herstellen zu können. Beispiele hierfür sind die modifizierten Polyvinylbutyrale mit niedriger Lösungsviskosität aus der DE-A 19641064, welche durch Acetalisierung eines Copolymeren mit Vinylalkohol- und 1-Alkyl-Vinylalkohol-Einheiten gewonnen werden.

Ein Nachteil, den alle im Stand der Technik beschriebenen Polyvinylacetale aufweisen, ist deren unzureichende Haftung auf speziellen Substraten. Aus diesem Grund ist die Zugabe von Haftvermittlern in vielen Fällen zwingend erforderlich. In der EP-B 0346768 wird beschrieben, Filme oder Folien mit aminofunktionellen Silanen, wie N-(2-Aminoethyl)-3-Aminopropyltrimethoxysilan, zu beschichten, um die Verbindung mit anderen Polymeren, insbesondere mit Polyvinylbutyralen, zu verbessern. Zur Verbesserung der Anbindung bei Polyethylen- und Polyesterfolien werden Polyester- und Polyethylenfolien entweder mit Vinyltrimethoxy- oder mit Chlorpropyltrimethoxysilanen beschichtet, was zu einer erfolgreichen Laminierung mit Hotmelt-Klebstoffen auf Ethylen/Vinylacetat-Copolymer-Basis führt (E. Plueddemann, "Bonding through Coupling Agents", Plenum Press, New York, 1985). Des weiteren wird N-2-Aminoethyl-3-Aminopropyltrimethoxysilan als Primer-Beschichtung eingesetzt, um die Haftung eines ionischen Harzes (Salz eines Polymers auf Ethylen/Methacrylsäure-Basis) auf Glas oder Polycarbonat-Folien zu verbessern (US-A 4663228). In der EP-B 0636471 wird ein Verfahren zur Herstellung eines Verbundglases beansprucht, wobei eine Verbesserung der Haftung zwischen Glas und Harzfilm (unter anderem Polyvinylbutyral) mit einer Mischung zweier oder mehrerer Silane erzielt wird.

Die im Stand der Technik beschriebenen Verfahren zur Verbesserung der Haftung zwischen Polyvinylacetalen und kritischen Substraten durch Zugabe der bekannten Haftvermittler weisen merkliche Nachteile auf. So hält beispielsweise die haftvermittelnde Wirkung oft nicht lange genug an oder der Verbund wird mit der Zeit schwächer. Ein weiterer Nachteil ist die Vergilbung von Aminosilanen, deren unangenehmer Geruch und deren hautreizende Wirkung; ein bekanntes Problem bei Verwendung von aminofunktionellen Verbindungen. Ein anderes Problem ist die Zugabe von den Haftvermittlern selbst. Dies bedeutet immer einen zusätzlichen, zeitaufwendigen Schritt bei der Rezeptierung. Des weiteren erfordert die Auswahl und die Zugabe geeigneter Haftvermittler viel Know-how, da beim Zugeben des Haftvermittlers zu einem Polyvinylacetal - beispielsweise in einem organischen Lösungsmittel - Unverträglichkeiten und Inhomogenitäten, die bis zur Phasenseparation reichen können, auftreten können. Überdies sind Nebenreaktionen der als Haftvermittler nachträglich zugegebenen reaktiven Silane nicht auszuschließen (Hydrolyse-, Kondensationsreaktionen). Ein weiterer Nachteil ist die große Menge an Haftvermittler, die meist zugesetzt werden muß, um eine merklich bessere Haftung von Polyvinylacetalen auf kritischen Substraten zu erzielen, so dass dieses Verfahren aufgrund des hohen Preises von Silanen sehr teuer werden kann.

Es bestand daher die Aufgabe, Polyvinylacetale zur Verfügung zu stellen, welche - für sich alleine - eine verbesserte Haftung auf unterschiedlichen und insbesondere auf den bekannten kritischen Substraten besitzen, so dass auf die Zugabe von Haftvermittlern teilweise oder gänzlich verzichtet werden kann.

Überraschenderweise wurde gefunden, dass niedermolekulare Polyvinylacetale, welche durch Verseifung bzw. Umesterung von niederviskosen Vinylester-Harzen und anschließender Acetalisierung der aus der Verseifung bzw. Umesterung resultierenden niederviskosen Polyvinylalkohole hergestellt werden, eine deutlich verbesserte Haftung auf kritischen Substraten besitzen, die sogar so weit reichen kann, dass auf Haftvermittler verzichtet werden kann. Auch die Metall- und die Glashaftung wird stark verbessert.

Gegenstand der Erfindung sind niedermolekulare Polyvinylacetale mit einer Lösungsviskosität von 2 bis 12 mPas (DIN 53015, Methode nach Höppler; 10 %ige Lösung in Ethanol) und einem Polymerisationsgrad Pw < 200, erhältlich mittels Verseifung eines Vinylester-Polymerisats und anschließender Acetalisierung des damit erhaltenen Polyvinylalkohols mit einem oder mehreren Aldehyden aus der Gruppe umfassend aliphatische und aromatische Aldehyde, mit 1 bis 15 C-Atomen, dadurch gekennzeichnet, dass
ein Vinylester-Polymerisat von einem oder mehreren Monomeren aus der Gruppe umfassend Vinylester von unverzweigten oder verzweigten Alkylcarbonsäuren mit 1 bis 15 C-Atomen, und gegebenenfalls einem oder mehreren Monomeren aus der Gruppe umfassend ethylenisch ungesättigte Mono- und Dicarbonsäuren, ethylenisch ungesättigte Carbonsäureamide und Cabonsäurenitrile, Monoester der Fumarsäure und Maleinsäure, ethylenisch ungesättigte Sulfonsäuren und jeweils deren Salze, mit einer Lösungsviskosität von 1.0 bis 1.6 mPas (DIN 53015, Methode nach Höppler; 10 %ige Lösung in Ethylacetat), verseift wird, und die Verseifung bis zu einem Gehalt von ≥ 50 Mol-% Vinylalkohol-Einheiten und unter Erhalt eines Polyvinylalkohols mit einer Lösungsviskosität von 1.0 bis 2.0 mPas (DIN 53015, Methode nach Höppler; 4 %-ige Lösung in Wasser), durchgeführt wird.

Geeignete Vinylester sind Vinylester von unverzweigten oder verzweigten Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, Vinylpivalat und Vinylester von α-verzweigten Monocarbonsäuren mit 5 bis 11 C-Atomen, beispielsweise VeoVa9^{R} oder VeoVa10^{R} (Handelsnamen der Firma Shell). Bevorzugt ist Vinylacetat. Vorzugsweise werden 50 bis 99.98 Gew.-% Vinylester , bezogen auf das Gesamtgewicht der Comonomeren, copolymerisiert.

Gegebenenfalls können die Vinylesterpolymerisate noch ein oder mehrere Monomere aus der Gruppe umfassend Methacrylsäureester und Acrylsäureester von Alkoholen mit 1 bis 15 C-Atomen, Olefine, Diene, Vinylaromaten und Vinylhalogenide enthalten. Deren Anteil wird dann so bemessen, dass der Vinylesteranteil im Mischpolymerisat ≥ 50 Mol-% beträgt. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat. Geeignete Diene sind 1,3-Butadien und Isopren. Beispiele für polymerisierbare Olefine sind Ethen und Propen. Als Vinylaromaten können Styrol und Vinyltoluol einpolymerisiert werden. Aus der Gruppe der Vinylhalogenide werden üblicherweise Vinylchlorid, Vinylidenchlorid oder Vinylfluorid, vorzugsweise Vinylchlorid, eingesetzt.

In einer bevorzugten Ausführungsform enthalten die Vinylester-Polymerisate noch 0.02 bis 20 Gew.-%, bezogen auf das Gesamtgewicht Vinylesterpolymerisats, ein oder mehrere Monomere aus der Gruppe umfassend ethylenisch ungesättigte Mono- und Dicarbonsäuren, ethylenisch ungesättigte Carbonsäureamide und Cabonsäurenitrile, Monoester der Fumarsäure und Maleinsäure. Bevorzugt werden Acrylsäure, Methacrylsäure, Fumarsäure, Maleinsäure, N-Vinylformamid, Acrylamid, Acrylnitril, Maleinsäureanhydrid, Vinylsulfonsäure, 2-Acrylamido-2-methyl-propansulfonsäure sowie deren Salze.

Gegebenenfalls können auch andere Hilfsmonomere in einem Anteil von 0.02 bis 20 Gew.-%, bezogen auf das Gesamtgewicht Vinylesterpolymerisats, enthalten sein. Beispiele hierfür sind vorvernetzende Comonomere wie mehrfach ethylenisch ungesättigte Comonomere, beispielsweise Divinyladipat, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAG-ME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Besonders bevorzugt werden Vinylesterpolymerisate mit 50 bis 99.98 Gew.-% Vinylester-Einheiten, insbesondere Vinylacetat, und 0.02 bis 20 Gew.-% Comonomereinheiten, welche sich von ethylenisch ungesättigten Mono- oder Dicarbonsäuren ableiten, jeweils bezogen auf das Gesamtgewicht des Polymerisats. Besonders bevorzugt ist auch eine Lösungsviskosität der Vinylester-Polymerisate von 1.0 bis 1.4 mPas (DIN 53015, Methode nach Höppler, in Ethylacetat bei 20°C).

Diese Vinylester-Polymerisate können in bekannter Weise mittels Polymerisation hergestellt werden; vorzugsweise durch Substanzpolymerisation, Suspensionspolymerisation oder durch Polymerisation in organischen Lösungsmitteln, besonders bevorzugt in alkoholischer Lösung. Geeignete Lösungsmittel und Regler sind beispielsweise Methanol, Ethanol, Propanol, Isopropanol. Die Polymerisation wird unter Rückfluß bei einer Temperatur von 50°C bis 100°C durchgeführt und durch Zugabe gängiger Initiatoren radikalisch initiiert. Beispiele für gängige Initiatoren sind Percarbonate wie Cyclohexylperoxi-dicarbonat oder Perester wie t-Butylperneodecanoat oder t-Butylperpivalat. Die Einstellung des Molekulargewichts kann in bekannter Weise durch Zugabe von Regler, durch den Lösungsmittelgehalt, durch Variation der Initiatorkonzentration und durch Variation der Temperatur erfolgen. Nach Abschluß der Polymerisation wird das Lösungsmittel sowie gegebenenfalls überschüssiges Monomer und Regler abdestilliert.

Die Verseifung der Vinylester-Polymerisate erfolgt in an sich bekannter Weise, zum Beispiel nach dem Band- oder Kneterverfahren, im Alkalischen oder Sauren unter Zugabe von Säure oder Base. Vorzugsweise wird das Vinylester-Festharz in Alkohol, beispielweise Methanol, unter Einstellen eines Feststoffgehalts von 15 bis 70 Gew.-% aufgenommen. Bevorzugt wird die Hydrolyse im Basischen durchgeführt, beispielsweise durch Zugabe von NaOH, KOH oder NaOCH₃. Die Base wird im allgemeinen in einer Menge von 1 bis 5 Mol-% pro Mol Ester-Einheiten eingesetzt. Die Hydrolyse wird bei Temperaturen von 30°C bis 70°C durchgeführt. Nach Abschluß der Hydrolyse wird das Lösungsmittel abdestilliert und der Polyvinylalkohol wird als Pulver erhalten. Der Polyvinylalkohol kann aber auch durch eine sukzessive Zugabe von Wasser, während das Lösungsmittel abdestilliert wird, als wässrige Lösung gewonnen werden.

Die damit erhaltenen teil- oder vollverseiften Vinylesterpolymerisate haben einen Hydrolysegrad von > 50 Mol%. Bevorzugte Bereiche sind für die teilverseiften Polyvinylalkohole Hydrolysegrade von 70 bis 90 Mol-%. Besonders bevorzugt werden vollverseifte Polyvinylalkohole mit einem Hydrolysegrad von ≥ 96 Mol-%. Die Viskosität des Polyvinylalkohols (DIN 53015, Methode nach Höppler; 4 %-ige Lösung in Wasser) beträgt 1.0 bis 2.0 mPas, vorzugsweise 1.0 bis 1.8 mPas, und dient als Maß für das Molekulargewicht bzw. für den Polymerisationsgrad der teil- oder vollverseiften Vinylesterpolymerisate. Der Polymerisationsgrad Pw (ermittelt aus der gewichtsmittleren Molmasse Mw) des eingesetzten Vinylesterpolymerisats bzw. Polyvinylalkohols ist nicht größer als 200, bevorzugt ist er kleiner 175, besonders bevorzugt kleiner 150. Der Polymerisationsgrad Pw wird aus Mw durch Lichtstreuung an einer 0.5 %-igen wässrigen Polyvinylalkohol-Lösung durch Auswertung mittels Zimm-Auftragung ermittelt.

Zur Acetalisierung werden die teil- oder vollverseiften Polyvinylacetate vorzugsweise in wässrigem Medium aufgenommen. Üblicherweise wird ein Festgehalt der wässrigen Lösung von 5 bis 30 Gew.-% eingestellt. Die Acetalisierung erfolgt in Gegenwart von sauren Katalysatoren wie Salzsäure, Schwefelsäure, Salpetersäure oder Phosphorsäure. Vorzugsweise wird durch Zugabe von 20 %-iger Salzsäure der pH-Wert der Lösung auf Werte < 1 eingestellt. Nach Zugabe des Katalysators wird die Lösung auf vorzugsweise -10°C bis +5°C abgekühlt. Die Acetalisierungsreaktion wird durch Zugabe des Aldehydanteils gestartet.

Bevorzugte Aldehyde aus der Gruppe der aliphatischen Aldehyde mit 1 bis 15 C-Atomen sind Formaldehyd, Acetaldehyd, Propionaldehyd und am meisten bevorzugt Butyraldehyd, oder eine Mischung aus Butyraldehyd und Acetaldehyd. Als aromatische Aldehyde können beispielsweise Benzaldehyd oder dessen Derivate verwendet werden. Die Zugabemenge an Aldehyd richtet sich dabei nach dem erwünschten Acetalisierungsgrad. Da die Acetalisierung mit fast vollständigem Umsatz abläuft, kann die Zugabemenge durch einfache stöchiometrische Rechnung bestimmt werden. Die Acetalisierung wird nach Abschluß der Zugabe des Aldehyds durch Erwärmen des Ansatzes auf 20°C bis 60°C und mehrstündiges Rühren, vorzugsweise 1 bis 6 Stunden vervollständigt, und das pulverförmige Reaktionsprodukt durch Filtration und nachgeschaltetem Waschschritt isoliert. Zur Stabilisierung können ferner Alkalien zugesetzt werden. Während der Fällung und der Nachbehandlung kann mit Emulgatoren gearbeitet werden, um die wässrige Suspension des Polyvinylacetals zu stabilisieren.

Zur Stabilisierung der wässrigen Suspension des Polyvinylacetals können anionische, zwitterionische, kationische und nichtionische Emulgatoren sowie Schutzkolloide verwendet werden. Bevorzugt werden zwitterionische oder anionische Emulgatoren eingesetzt, gegebenenfalls auch in Mischungen. Als nichtionische Emulgatoren werden bevorzugt Kondensationsprodukte von Ethylenoxid (EO) oder Propylenoxid (PO) mit linearen oder verzweigten Alkoholen mit 8 bis 18 Kohlenstoffatomen, Alkylphenolen oder linearen oder verzweigten Carbonsäuren von 8 bis 18 Kohlenstoffatomen eingesetzt, sowie Blockcopolymere von Ethylenoxid und Propylenoxid eingesetzt. Geeignete anionische Emulgatoren sind beispielsweise Alkylsulfate, Alkylsulfonate, Alkylarylsulfate, sowie Sulfate oder Phosphate von Kondensationsprodukten des Ethylenoxides mit linearen oder verzweigten Alkylalkoholen und mit 2 bis 25 EO-Einheiten, Alkylphenolen, und Mono- oder Diester der Sulfobernsteinsäure. Geeignete zwitterionische Emulgatoren sind beispielsweise Alkyldimethylaminoxide, wobei die Alkylkette 6 bis 16 C-Atome besitzt. Als kationische Emulgatoren können z.B. Tetraalkylammoniumhalogenide, wie C₆-C₁₆-Alkyltrimethylammoniumbromid verwendet werden. Ebenso können Trialkyamine mit einem längeren (≥ 5 C-Atome) und zwei kürzeren Kohlenwasserstoffresten (< 5 C-Atome) eingesetzt werden, die im Zuge der Acetalisierung, die unter stark sauren Bedingungen abläuft, in protonierter Form vorliegen und als Emulgator wirken können. Die Emulgatormenge beträgt 0.01 bis 20 Gew.-%, bezogen auf das Gesamtgewicht des Polyvinylacetals in der Mutterlauge. Bevorzugt ist eine Menge von 0.01 bis 2 Gew.-% an Emulgator, besonders bevorzugt ist eine Menge von 0.01 bis 1 Gew.-% Emulgator bezogen auf das Polyvinylacetal.

Die Polyvinylacetale besitzen einen Acetalisierungsgrad von 1 bis 80 Mol-%, vorzugsweise 45 bis 80 Mol-%. Die Viskosität der Polyvinylacetale (DIN 53015; Methode nach Höppler, 10 %-ige Lösung in Ethanol) beträgt vorzugsweise 2 bis 10 mPas, besonders bevorzugt 3 bis 8 mPas. Der Polymerisationsgrad Pw ist kleiner 200, bevorzugt < 175, besonders bevorzugt < 150. Die am meisten bevorzugten Polyvinylacetale besitzen einen Acetalisierungsgrad von 45 bis 80 Mol-% und eine Viskosität (DIN 53015, Methode nach Höppler; 10 %-ige Lösung in Ethanol) von 2 bis 10 mPas.

Mit der erfindungsgemäßen Verfahrensweise werden niedermolekulare Polyvinylacetale zugänglich, welche gegenüber den bisher eingesetzten Polyvinylacetalen eine deutlich bessere Haftung auf kritischen Substraten besitzen, so dass auf die Zugabe von Haftvermittlern teilweise oder ganz verzichtet werden kann.

Wie eingangs erwähnt, besteht vor allem in der Druckfarbenindustrie Bedarf an Bindemitteln mit möglichst guter Haftung auf flexiblen Folien unterschiedlicher Polymere, um damit Druckfarben zur Verfügung stellen zu können, die nach dem Applizieren sehr fest mit dem Substrat verbunden sind und damit nur sehr schwer vom bedruckten Substrat abzulösen sind. Aufgrund der hervorragenden Haftung der niedermolekularen Polyvinylacetale, insbesondere Polyvinylbutyrale oder gemischte Polyvinylacetale, eignen sich diese insbesondere zur Verwendung in Druckfarbenzusammensetzungen.

Geeignete Druckfarbenformulierungen sind dem Fachmann bekannt und enthalten im allgemeinen 5 bis 20 Gew.-% Pigmentanteil, beispielsweise Diazo- oder Phthalocyanin-Pigmente, 5 bis 15 Gew.-% Polyvinylacetal-Bindemittel und Lösungsmittel, beispielsweise Alkohole wie Ethanol oder Ester wie Ethylacetat. Gegebenenfalls können noch weitere Zusatzstoffe wie Verzögerer, Weichmacher und andere Additive, wie beispielsweise Füllstoffe oder Wachse, enthalten sein. Haftvermittler sind nicht mehr zwingend erforderlich.

Auch für Verbundsicherheitsglas und Glasverbunde, Hochsicherheitsglas oder Scheibenfolien sind die niedermolekularen Polyvinylacetale als Additive sehr gut geeignet, da neben einer nochmals verbesserten Haftung auf Glas auch eine höhere Reissfestigkeit erzielt werden kann.

Des weiteren dienen wasserlösliche, teilacetalisierte, niedermolekulare Polyvinylacetale, die auch ionische Gruppen wie Carboxylatgruppen oder Sulfonatgruppen enthalten können, als Schutzkolloid, beispielsweise für wässrige Dispersionen, bei der Polymerisation in wässrigem Medium, und bei der Herstellung von in Wasser redispergierbaren Dispersionspulvern. Bevorzugt werden dabei wasserlösliche (Löslichkeit von mehr als 10 g/1 in Wasser unter Normalbedingungen) Polyvinylacetale mit einem Acetalisierungsgrad von 1 bis 20 Mol-%, insbesondere 3 bis 16 Mol-%.

Die niedermolekularen Polyvinylacetale können ferner in Lacken auf wässriger Basis Verwendung finden. Weitere Einsatzgebiete der niedermolekularen Polyvinylacetale sind die Verwendung als Bindemittel in Korrosionsschutzmitteln, wobei als Vorteile die bessere Haftung zu nennen ist. Weiter sind die Polyvinylacetale auch als Bindemittel in der Keramikindustrie, speziell als Binder für keramische Grünkörper, geeignet. Zu nennen ist auch der Einsatz als Bindemittel für Keramikpulver und Metallpulver im Spritzguß (powder injection molding) und als Bindemittel für die Innenbeschichtung von Dosen. In allen Fällen zeigen die niedermolekularen Polyvinylacetale eine erheblich bessere Haftung als die im Stand der Technik bekannten Polyvinylacetale.

Die nachfolgenden Beispiele dienen zur weiteren Erläuterung der Erfindung, ohne diese in irgendeiner Weise einzuschränken:

### Beispiel 1:

In einem 6 Liter Glasreaktor wurden 2775 ml dest. Wasser, 1143 ml 20 %-ige HCl und 1110 ml einer 20.9 %-igen wäßrigen Lösung eines Polyvinylalkohols - Verseifungszahl (VZ) 20.3 mg KOH/g, Viskosität 2.02 mPas (DIN 53015; Methode nach Höppler; 4 %-ige wässrige Lösung), K-Wert 25.2, vorgelegt. Die Vorlage wurde unter Rühren innerhalb einer Stunde auf -7°C abgekühlt. Anschließend wurden in einem Zeitraum von 5 Minuten 175 ml Butyraldehyd, vorgekühlt auf -4°C, zugegeben. Die Innentemperatur stieg dabei kurzzeitig auf -5°C an. Etwa fünf bis sieben Minuten nach Zugabe des Butyraldehyds wurde der zunächst klare Ansatz milchig trüb, und bereits 10 Minuten später fiel das Produkt aus. Nach 40 Minuten Reaktionszeit bei -7°C wurde die Temperatur über einen Zeitraum von 3.5 Stunden auf 25°C erhöht und diese Temperatur für weitere 2 Stunden gehalten. Daraufhin wurde das Produkt abgesaugt und solange mit destilliertem Wasser gewaschen, bis das Filtrat neutral reagierte. Anschließend erfolgte die Trocknung bis zu einem Festgehalt von mindestens 98 %, zunächst bei 22°C, dann bei 35°C im Vakuum.
Es wurde ein niedermolekulares Polyvinylbutyral mit 17.5 Gew.-% Vinylalkohol-Einheiten erhalten. Der Vinylacetat-Gehalt lag unter 2 Gew.-%. Die Viskosität (DIN 53015; Methode nach Höppler; 10 %-ige ethanolische Lösung) betrug 5.48 mPas und Pw < 175.

### Beispiel 2:

In einem 6 Liter Glasreaktor wurden 2700 ml dest. Wasser, 600 ml 20 %-ige HCl und 1400 ml einer 17.0 %-igen wässrigen Lösung eines Polyvinylalkohols - VZ 44.2 mg KOH/g, Viskosität 1.92 mPas (DIN 53015; Methode nach Höppler; 4 %-ige wässrige Lösung) vorgelegt. Die Vorlage wurde unter Rühren innerhalb einer Stunde auf +3°C abgekühlt. Anschließend wurden in einem Zeitraum von 5 Minuten 120 ml Acetaldehyd, vorgekühlt auf - 4°C, zugegeben. Die Reaktorinnentemperatur stieg dabei auf +5°C an. Innerhalb kürzester Zeit wurde wieder auf +3°C abgekühlt und bei dieser Temperatur 20 Minuten gerührt. Danach wurden im selben Zeitraum von 5 Minuten 150 ml Butyraldehyd, vorgekühlt auf -4°C, zugegeben. Die Innentemperatur stieg dabei kurzzeitig auf 4.5°C an. Sechs bis acht Minuten nach Zugabe des Butyraldehyds wurde der zunächst klare Ansatz milchig trüb, und bereits 10 Minuten später fiel das Produkt aus. Nach 40 Minuten Reaktionszeit bei +3°C wurde die Temperatur über einen Zeitraum von 3.5 Stunden auf 25°C erhöht und diese Temperatur für weitere 2 Stunden gehalten. Daraufhin wurde das Produkt abgesaugt und solange mit destilliertem Wasser gewaschen, bis das Filtrat neutral reagierte. Anschließend erfolgte die Trocknung bis zu einem Festgehalt von mindestens 98 %, zunächst bei 22°C, dann bei 35°C im Vakuum.
Es wurde ein niedermolekulares Polyvinylacetal mit 13.2 Gew.-% Vinylalkohol-Einheiten erhalten. Der Vinylacetat-Gehalt belief sich auf 3.7 Gew.-%. Die Viskosität (DIN 53015; Methode nach Höppler; 10 %-ige ethanolische Lösung) betrug 5.02 mPas und Pw < 175.

### Beispiel 3:

In einem 6 Liter Glasreaktor wurden 2590 ml dest. Wasser, 1114 ml 20 %-ige HCl und 1250 ml einer 19.1 %-igen wässrigen Lösung eines Polyvinylalkohols - VZ 78.1 mg KOH/g, Viskosität 1.84 mPas (DIN 53015; Methode nach Höppler; 4 %-ige wässrige Lösung), hergestellt durch Verseifen eines säurefunktionalisierten PVac-Festharzes mit 0.2 Gew.-% Acrylsäure (bezogen auf Gesamtgewicht Polymer) - vorgelegt. Die Vorlage wurde unter Rühren innerhalb einer Stunde auf -5°C abgekühlt und anschließend innerhalb eines Zeitraumes von 5 Minuten 180 ml Butyraldehyd, vorgekühlt auf -4°C, zugegeben. Die Reaktorinnentemperatur stieg dabei auf -3.5°C an. Innerhalb kürzester Zeit wurde wieder auf -5°C abgekühlt. 4 Minuten nach Zugabe des Butyraldehyds wurde der bis dahin klare Ansatz milchig trüb und bereits 6 Minuten später fiel das Produkt aus. Nach 40 Minuten Reaktionszeit bei -5°C wurde die Temperatur über einen Zeitraum von 3.5 Stunden auf 25°C erhöht und diese Temperatur für weitere 2 Stunden gehalten. Daraufhin wurde das Produkt abgesaugt und solange mit destilliertem Wasser gewaschen, bis das Filtrat neutral reagierte. Anschließend erfolgte die Trocknung bis zu einem Festgehalt von mindestens 98 %, zunächst bei 22°C, dann bei 35°C im Vakuum.
Es wurde ein niedermolekulares Polyvinylbutyral mit 16.9 Gew.-% Vinylalkohol-Einheiten erhalten. Der Vinylacetat-Gehalt belief sich auf 6.3 Gew.-%. Die Viskosität (DIN 53015; Methode nach Höppler; 10 %-ige ethanolische Lösung) betrug 4.83 mPas und Pw < 175.

### Vergleichsbeispiel 4:

Es wurde analog Beispiel 2 vorgegangen mit dem Unterschied, dass zur Acetalisierung als Polyvinylalkohol eine 20 %-ige wässrige Lösung eines vollverseiften Vinylacetat-Homopolymers mit einem Restgehalt an Vinylacetat-Einheiten von 2 Gew.-% und einer Viskosität (DIN 53015; Methode nach Höppler; 4 %-ige wäßrige Lösung) von 3.2 mPas vorgelegt wurde. Die Acetalisierung wurde mit 100 ml Acetaldehyd und 128 ml Butyraldehyd durchgeführt.
Es wurde ein Polyvinylbutyral mit 15.8 Gew.-% Vinylalkohol-Einheiten erhalten. Die Viskosität (DIN 53015; Methode nach Höppler; 10 %-ige ethanolische Lösung) betrug 25.8 mPas und Pw > 200.

### Vergleichsbeispiel 5:

Es wurde analog Beispiel 1 vorgegangen mit dem Unterschied, dass zur Acetalisierung als Polyvinylalkohol eine 20 %-ige wässrige Lösung eines vollverseiften Vinylacetat-Homopolymers mit einem Restgehalt an Vinylacetat-Einheiten von 2 Gew.-% und einer Viskosität (DIN 53015; Methode nach Höppler; 4 %-ige wäßrige Lösung) von 3.5 mPas vorgelegt wurde. Die Acetalisierung wurde mit 190 ml Butyraldehyd durchgeführt.
Es wurde ein Polyvinylbutyral mit 17.1 Gew.% Vinylalkohol-Einheiten, 2.0 Gew.-% Vinylacetat-Einheiten erhalten. Die Viskosität (DIN 53015; Methode nach Höppler; 10 %-ige ethanolische Lösung) betrug 26.9 mPas und Pw > 200.

### Bestimmungsmethoden:

1. Bestimmung der dynamischen Viskosität einer Lösung von Polyvinylacetalen (Lösungsviskosität):
   90.00 ± 0.01 g Ethanol und 10.00 ± 0.01 g Polyvinylacetal wurden in einem 250 ml Erlenmeyerkolben mit Schliffstopfen eingewogen und bei 50°C in der Schüttelmaschine vollständig aufgelöst. Anschließend wurde auf 20°C abgekühlt und die dynamische Viskosität (DIN 53 015; Methode nach Höppler) bei 20°C mit einer geeigneten Kugel, z.B. der Kugel 2 oder 3, bestimmt.
2. Bestimmung des Vinylalkohol-Gehalts:
   Der Gehalt an Vinylalkohol-Gruppen in den Polyvinylacetalen wurde durch die Acetylierung der Hydroxylgruppen mit Essigsäureanhydrid in Gegenwart von Pyridin und 4-Dimethylaminopyridin ermittelt.
   Dazu wurden 1 g ± 0.001 g Polyvinylacetal in 24 ml Pyridin und 0.04 g 4-Dimethylaminopyridin bei 50°C innerhalb von 2 Stunden gelöst. Die auf 25°C abgekühlte Lösung wurde mit 10 ml einer Mischung aus Pyridin und Essigsäureanhydrid (87/13 Volumenteile) versetzt und 1 Stunde intensiv durchmischt. Daraufhin wurden 30 ml einer Mischung aus Pyridin/ Wasser (5/1 Volumenteile) zugesetzt und eine weitere Stunde geschüttelt. Anschließend wurde mit methanolischer 0.5 N KOH auf pH 7 titriert. Berechnung : Gew.-% Vinylalkohol = [(100 x M_{w})/2000] x (ml Blindwert - ml Probe). Mit Mw = Mittleres Molekulargewicht pro Repetiereinheit des Polymeren.
3. Bestimmung der Viskosität der Polyvinylalkohol-Lösungen:
   Die Bestimmung der Viskosität der als Edukte eingesetzten teil- oder vollverseiften silanisierten Festharze erfolgte analog zur Bestimmung der dynamischen Viskosität der Polyvinylacetale; es wurden nur 4 %-ige wässrige Lösungen eingesetzt.
4. Bestimmung der Haftung:
   a) Tesa-Test:
      Von der zu untersuchenden Probe (z.B. Polyvinylacetal) wird auf einer (evtl. vorher mit Isopropanol gereinigten) Folie (ggf. Corona-vorbehandelt) ein blasenfreier Film gezogen und getrocknet. Das Polyvinylacetal wird dazu in Ethanol gelöst, wobei sich die Konzentration jeweils nach der Viskosität der Lösung richtet. Für die Prüfung wird der Tesafilm 4105 der Beiersdorf AG mit einer Breite von 15 mm verwendet. Um die Haftfestigkeit zu prüfen, wird auf die getrocknete und mindestens 16 h bei Raumtemperatur gelagerte Folie ein 13 cm langer Streifen aufgeklebt. Durch gleichmäßiges, kräftiges Darüberstreichen mit dem Fingernagel, wobei ein Ende des Tesa-Films festgehalten wird, um eine Abzugslasche zu erhalten, wird der Andruck fixiert. Die zu prüfende Folie sollte sich dabei auf einer harten Unterlage befinden. Der Tesa-Film wird nun an der Lasche in einem Winkel von 45° ruckartig abgezogen. Die getestete Stelle wird daraufhin untersucht, ob und wieviel des Films sich vom Bedruckstoff gelöst hat und am Tesa-Film haftet. Die Prüfung wird an mehreren Stellen, unter gleichen Bedingungen, durchgeführt. Die Benotung erfolgt in Notenstufen von 1 bis 4, wobei 1 die beste, 4 die schlechteste Bewertung ist.
      Die Beurteilung im Einzelnen:
      1 = sehr gute Haftung (keine abgelösten Stellen)
      2 = an vereinzelten Stellen hat sich die Beschichtung abgelöst
      3 = an mehreren Stellen hat sich die Beschichtung abgelöst
      4 = keine Haftung der Beschichtung (vollständig abgelöst)
   b) Bestimmung der Verbundhaftung:
      Durch eine instrumentelle Messung der Verbundfestigkeit im Laminat kann man die Haftung eines Lackes oder einer Druckfarbe auf einem Untergrund in Zahlen ausdrücken. Für diese Untersuchung wurde jeder Folientyp gegen sich selbst kaschiert. Wurden die Folien vor dem Applizieren des Lackes coronavorbehandelt, so wurde auch die Laminatfolie der gleichen Vorbehandlung unterzogen. Zur Herstellung der Laminate wird eine Kaschierungswalze mit einem Gewicht von 5 kg benutzt, als Kleber wird ein 2K-PUR System (Liofol UK 3640/Härter UK 6800) der Firma Henkel eingesetzt. Dieses System eignet sich für die Herstellung von Verbundfolien aus PE, PP, PET, PA und h-PVC. Zur Herstellung eines gebrauchsfertigen Klebers wird die erste Komponente Kleber auf 35 % verdünnt und anschließend im Verhältnis 50 : 1 mit dem Härter gemischt. Dieser Kleber wird auf die Folie appliziert, 30 s bei Raumtemperatur getrocknet und gegen die mit Lack beschichtete Seite (Beschichtung wie bei Tesa-Test) einer anderen Folie kaschiert, indem man die Rolle 6mal ohne Druck über den Verbund führt. Der Kleber wird 24 h bei einer Temperatur von 60°C ausgehärtet. Der Verbund wird in 15 mm breite Streifen geschnitten und die Haftfestigkeit wird an einem Zugprüfgerät der Fa. Instron gemessen. Je höher der gemessene Wert, umso besser ist die Verbundhaftung. Bei einer sehr guten Verbundhaftung kann es sogar bis zu einem Folienriss kommen. In diesem Fall wird kein quantitativer Wert angegeben.

### Anwendungstechnische Ergebnisse:

Zur Untersuchung der Haftung wurde der Tesa-Test und die Bestimmung der Verbundhaftung mit folgenden handelsüblichen Folien durchgeführt:
DuPont PET Melinex 800; Coronavorbehandlung mit 400 W
DuPont PET Melinex 813; unbehandelt
OPP Mobil MB 400; unbehandelt; (Polypropylen-Folie)
OPP Mobil MB 400; Coronavorbehandlung mit 600 W, (Polypropylen-Folie)

Ergebnisse der Messungen der Haftung der Produkte aus den Beispielen bzw. Vergleichsbeispielen (Tabelle 1) :

**Tabelle 1:**

| Tesa-Test-Bewertung | | | | |
|---|---|---|---|---|
| Beispiel | PET 800 Corona-B. | PET 813 unbehandelt | OPP 400 unbehandelt | OPP 400 Corona-B. |
| 1 | 1 | 1 | 3 | 2 |
| 2 | 1 | 1 | 1 | 1 |
| 3 | 1 | 1 | 1 | 1 |
| V4 | 1 | 1 | 4 | 4 |
| V5 | 1 | 1 | 4 | 4 |

Mit den erfindungsgemäßen niedermolekularen Polyvinylacetalen erhält man im Tesa-Test vor allem bei den Polypropylen-Folien (OPP Mobil MB 400, behandelt und unbehandelt) eine deutliche Verbesserung der Haftung. Dies belegt ein Vergleich von Beispiel 1 und 3 mit Vergleichsbeispiel 5 und ein Vergleich von Beispiel 2 mit Vergleichsbeispiel 4.
Bei den Polyester-Folien DuPont PET Melinex ist der Tesa-Test nicht aussagekräftig, da hier auch die Vergleichsmuster (Standardware) schon von vornherein eine sehr gute Haftung zeigen.

Deutlicher werden die Unterschiede durch die Bestimmung der Verbundhaftung, die Tabelle 2 zu entnehmen ist.

**Tabelle 2:**

| Bestimmung der Verbundhaftung; Einheit: N/15mm | | | | |
|---|---|---|---|---|
| Beispiel | PET 800 Corona-B. | PET 813 unbehandelt | OPP 400 unbehandelt | OPP 400 Corona-B. |
| 1 | 0.35 | 0.45 | 0.55 | 0.63 |
| 2 | 0.75 | 0.72 | 0.95 | 1.21 |
| 3 | 0.46 tF | F | 0.69 | 0.72 tF |
| V4 | 0.09 | 0.15 | 0.05 | 0.11 |
| V5 | 0.03 | 0.09 | 0.02 | 0.01 |
| TF = teilweiser Folienriss; F=Folienriss | | | | |

Mit den erfindungsgemäßen niedermolekularen Polyvinylacetalen wurde die Verbundhaftung bei allen getesteten Folien deutlich erhöht. Dies belegt ein Vergleich von Beispiel 1 mit Vergleichsbeispiel 5. Der Effekt wird durch das Einführen von Carboxylgruppen in das niedermolekulare Polyvinylacetal nochmals verstärkt, was ein Vergleich von Beispiel 3 mit Vergleichsbeispiel 5 zeigt. Hier wurde die Verbundhaftung bei Polyester-Folien (DuPont PET Melinex 800 und 813) und bei der Polypropylen-Folie OPP Mobil MB 400 (coronabehandelt) so stark erhöht, dass sogar kompletter oder teilweiser Folienriss auftritt.

## Patentansprüche

1. Niedermolekulare Polyvinylacetale mit einer Lösungsviskosität von 2 bis 12 mPas (DIN 53015, Methode nach Höppler; 10 %ige Lösung in Ethanol) und einem Polymerisationsgrad Pw < 200, erhältlich mittels Verseifung eines Vinylester-Polymerisats und anschließender Acetalisierung des damit erhaltenen Polyvinylalkohols mit einem oder mehreren Aldehyden aus der Gruppe umfassend aliphatische und aromatische Aldehyde, mit 1 bis 15 C-Atomen, **dadurch gekennzeichnet, dass**
ein Vinylester-Polymerisat von einem oder mehreren Monomeren aus der Gruppe umfassend Vinylester von unverzweigten oder verzweigten Alkylcarbonsäuren mit 1 bis 15 C-Atomen, und gegebenenfalls einem oder mehreren Monomeren aus der Gruppe umfassend ethylenisch ungesättigte Mono- und Dicarbonsäuren, ethylenisch ungesättigte Carbonsäureamide und Cabonsäurenitrile, Monoester der Fumarsäure und Maleinsäure, ethylenisch ungesättigte Sulfonsäuren und jeweils deren Salze, mit einer Lösungsviskosität von 1.0 bis 1.6 mPas (DIN 53015, Methode nach Höppler; 10 %ige Lösung in Ethylacetat), verseift wird, und die Verseifung bis zu einem Gehalt von ≥ 50 Mol-% Vinylalkohol-Einheiten und unter Erhalt eines Polyvinylalkohols mit einer Lösungsviskosität von 1.0 bis 2.0 mPas (DIN 53015, Methode nach Höppler; 4 %-ige Lösung in Wasser), durchgeführt wird.

2. Niedermolekulare Polyvinylacetale nach Anspruch 1, **dadurch gekennzeichnet, dass** das Vinylester-Polymerisat 50 bis 99.98 Gew.-% Vinylester , bezogen auf das Gesamtgewicht des Polymerisats, enthält.

3. Niedermolekulare Polyvinylacetale nach Anspruch 1 bis 2, **dadurch gekennzeichnet, dass** das Vinylesterpolymerisat noch ein oder mehrere Monomere aus der Gruppe umfassend Methacrylsäureester und Acrylsäureester von Alkoholen mit 1 bis 15 C-Atomen, Olefine, Diene, Vinylaromaten und Vinylhalogenide enthält, wobei deren Anteil so bemessen ist, dass der Vinylesteranteil im Mischpolymerisat ≥ 50 Mol-% beträgt.

4. Niedermolekulare Polyvinylacetale nach Anspruch 1 bis 3, **dadurch gekennzeichnet, dass** das Vinylesterpolymerisat noch ein oder mehrere Monomere aus der Gruppe umfassend noch 0.02 bis 20 Gew.-%, bezogen auf das Gesamtgewicht Vinylesterpolymerisats, ein oder mehrere Monomere aus der Gruppe umfassend ethylenisch ungesättigte Mono- und Dicarbonsäuren, ethylenisch ungesättigte Carbonsäureamide und Carbonsäurenitrile, Monoester der Fumarsäure und Maleinsäure enthält.

5. Niedermolekulare Polyvinylacetale nach Anspruch 1 bis 4, **dadurch gekennzeichnet, dass** die Verseifung bis zu einem Hydrolysegrad von 70 bis 90 Mol-% und einer Lösungsviskosität von 1.0 bis 2.0 mPas (DIN 53015, Methode nach Höppler; 4 %-ige Lösung in Wasser) durchgeführt wird.

6. Niedermolekulare Polyvinylacetale nach Anspruch 1 bis 5, **dadurch gekennzeichnet, dass** zur Acetalisierung Butyraldehyd, gegebenenfalls im Gemisch mit Acetaldehyd eingesetzt wird.

7. Niedermolekulare Polyvinylacetale nach Anspruch 1 bis 6, **dadurch gekennzeichnet, dass** der Acetalisierungsgrad von 1 bis 80 Mol-% beträgt, der Polymerisationsgrad Pw < 175 und die Lösungsviskosität 2 bis 10 mPas beträgt.

8. Verfahren zur Herstellung der niedermolekularen Polyvinylacetale nach Anspruch 1 bis 7, wobei
a) ein Vinylester-Polymerisat von einem oder mehreren Monomeren aus der Gruppe umfassend Vinylester von unverzweigten oder verzweigten Alkylcarbonsäuren mit 1 bis 15 C-Atomen, und gegebenenfalls einem oder mehreren Monomeren aus der Gruppe umfassend ethylenisch ungesättigte Mono- und Dicarbonsäuren, ethylenisch ungesättigte Carbonsäureamide und Cabonsäurenitrile, Monoester der Fumarsäure und Maleinsäure, ethylenisch ungesättigte Sulfonsäuren und jeweils deren Salze, mit einer Lösungsviskosität von 1.0 bis 1.6 mPas (DIN 53015, Methode nach Höppler; 10 %ige Lösung in Ethylacetat), verseift wird, die Verseifung bis zu einem Gehalt von ≥ 50 Mol-% Vinylalkohol-Einheiten und unter Erhalt eines Polyvinylalkohols mit einer Lösungsviskosität von 1.0 bis 2.0 mPas (DIN 53015, Methode nach Höppler; 4 %-ige Lösung in Wasser), durchgeführt wird,
b) der in a) erhaltene Polyvinylalkohol mit einem oder mehreren Aldehyden aus der Gruppe umfassend aliphatische und aromatische Aldehyde, mit 1 bis 15 C-Atomen bis zu einem Acetalisierungsgrad von 1 bis 80 Mol-% acetalisiert wird.

9. Verwendung der niedermolekularen Polyvinylacetale nach Anspruch 1 bis 7 in Druckfarbenzusammensetzungen.

10. Verwendung nach Anspruch 9, **dadurch gekennzeichnet, dass** die Druckfarbenzusammensetzung 5 bis 20 Gew.-% Pigmentanteil 5 bis 15 Gew.-% niedermolekulares Polyvinylacetal-Bindemittel und Lösungsmittel, sowie gegebenenfalls noch weitere Zusatzstoffe enthält.

11. Verwendung der niedermolekularen Polyvinylacetale nach Anspruch 1 bis 7 in Verbundsicherheitsglas, Glasverbunden und Scheibenfolien.

12. Verwendung der niedermolekularen Polyvinylacetale nach Anspruch 1 bis 7 als Schutzkolloide für wässrige Dispersionen, bei der Polymerisation in wässrigem Medium, und bei der Herstellung von in Wasser redispergierbaren Dispersionspulvern.

13. Verwendung der niedermolekularen Polyvinylacetale nach Anspruch 1 bis 7 als Bindemittel in Lacken auf wässriger Basis.

14. Verwendung der niedermolekularen Polyvinylacetale nach Anspruch 1 bis 7 als Bindemittel in Pulverlacken.

15. Verwendung der niedermolekularen Polyvinylacetale nach Anspruch 1 bis 7 als Bindemittel in Korrosionsschutzmitteln.

16. Verwendung der niedermolekularen Polyvinylacetale nach Anspruch 1 bis 7 als Bindemittel für Keramikpulver und Metallpulver.

17. Verwendung der niedermolekularen Polyvinylacetale nach Anspruch 1 bis 7 als Bindemittel für die Innenbeschichtung von Dosen.

## Claims

1. Low-molecular-weight polyvinyl acetals with a solution viscosity of from 2 to 12 mPas (DIN 53015, Höppler method; 10% strength solution in ethanol) and with a degree of polymerization P_{w} < 200, obtainable by hydrolyzing a vinyl ester polymer and then acetalizing the resultant polyvinyl alcohol using one or more aldehydes selected from the group consisting of aliphatic and aromatic aldehydes having from 1 to 15 carbon atoms, **characterized in that**
a vinyl ester polymer of one or more monomers selected from the group consisting of vinyl esters of unbranched or branched alkylcarboxylic acids having from 1 to 15 carbon atoms, and, where appropriate, of one or more monomers selected from the group consisting of ethylenically unsaturated mono- and dicarboxylic acids, ethylenically unsaturated carboxamides and carbonitriles, monoesters of fumaric acid or maleic acid, ethylenically unsaturated sulfonic acids and salts of each of these, with solution viscosity of from 1.0 to 1.6 mPas (DIN 53015, Höppler method; 10% strength solution in ethyl acetate) is hydrolyzed, and the hydrolysis is carried out until the content of vinyl alcohol units is ∃ 50 mol%, and with production of a polyvinyl alcohol whose solution viscosity is from 1.0 to 2.0 mPas (DIN 53015, Höppler method; 4% strength solution in water).

2. Low-molecular-weight polyvinyl acetals according to claim 1, **characterized in that** the vinyl ester polymer contains from 50 to 99.98% by weight of vinyl ester, based on the total weight of the polymer.

3. Low-molecular-weight polyvinyl acetals according to claim 1 or 2, **characterized in that** the vinyl ester polymer also contains one or more monomers selected from the group consisting of methacrylic esters and acrylic esters of alcohols having from 1 to 15 carbon atoms, olefins, dienes, vinylaromatics, and vinyl halides, the proportion of these being such that the vinyl ester content in the copolymer is ∃ 50 mol%.

4. Low-molecular-weight polyvinyl acetals according to any of claims 1 to 3, **characterized in that** the vinyl ester polymer also contains one or more monomers selected from the group consisting of ethylenically unsaturated mono- or dicarboxylic acids, ethylenically unsaturated carboxamides and carbonitriles, monoesters of fumaric acid and maleic acid.

5. Low-molecular-weight polyvinyl acetals according to any of claims 1 to 4, **characterized in that** the hydrolysis is carried out to a degree of hydrolysis of from 70 to 90 mol% and to a solution viscosity of from 1.0 to 2.0 mPas (DIN 53015, Höppler method; 4% strength solution in water).

6. Low-molecular-weight polyvinyl acetals according to any of claims 1 to 5, **characterized in that** butyraldehyde, where appropriate mixed with acetaldehyde, is used for the acetalization.

7. Low-molecular-weight polyvinyl acetals according to any of claims 1 to 6, **characterized in that** the degree of acetalization is from 1 to 80 mol%, the degree of polymerization P_{w} is < 175, and the viscosity of the solution is from 2 to 10 mPas.

8. Process for preparing the low-molecular-weight polyvinyl acetals according to any of claims 1 to 7, where
a) a vinyl ester polymer of one or more monomers selected from the group consisting of vinyl esters of unbranched or branched alkylcarboxylic acids having from 1 to 15 carbon atoms, and, where appropriate, one or more monomers selected from the group consisting of ethylenically unsaturated mono- and dicarboxylic acids, ethylenically unsaturated carboxamides and carbonitriles, monoesters of fumaric acid and maleic acid, ethylenically unsaturated sulfonic acids, and salts of each of these, with solution viscosity of from 1.0 to 1.6 mPas (DIN 53015, Höppler method; 10% strength solution in ethyl acetate) is hydrolyzed, the hydrolysis is carried out until the content of vinyl alcohol units is ∃ 50 mol% to give a polyvinyl alcohol with a solution viscosity of from 1.0 to 2.0 mPas (DIN 53015, Höppler method; 4% strength solution in water), and
b) the polyvinyl alcohol obtained in a) is acetalized using one or more aldehydes selected from the group consisting of aliphatic and aromatic aldehydes having from 1 to 15 carbon atoms, to a degree of acetalization of from 1 to 80 mol%.

9. Use of the low-molecular-weight polyvinyl acetals according to any of claims 1 to 7 in printing ink formulations.

10. Use according to claim 9, **characterized in that** the printing ink formulation comprises from 5 to 20% by weight of pigment and from 5 to 15% by weight of low-molecular-weight polyvinyl acetal binder, and solvents, and, where appropriate, also comprises other additives.

11. Use of the low-molecular-weight polyvinyl acetals according to any of claims 1 to 7 in laminated safety glass, glass composites, or glazing films.

12. Use of the low-molecular-weight polyvinyl acetals according to any of claims 1 to 7 as protective colloid for aqueous dispersions, during polymerization in an aqueous medium, or during the preparation of water-redispersible dispersion powders.

13. Use of the low-molecular-weight polyvinyl acetals according to any of claims 1 to 7 as binder in water-based paints.

14. Use of the low-molecular-weight polyvinyl acetals according to any of claims 1 to 7 as binder in powder paints.

15. Use of the low-molecular-weight polyvinyl acetals according to any of claims 1 to 7 as binder in corrosion-prevention compositions.

16. Use of the low-molecular-weight polyvinyl acetals according to any of claims 1 to 7 as binder for ceramic powders or metal powders.

17. Use of the low-molecular-weight polyvinyl acetals according to any of claims 1 to 7 as binder for the internal coating of containers.

## Revendications

1. Polyvinylacétals de bas poids moléculaire présentant une viscosité de solution de 2 à 12 mPa.s (DIN 53 015, procédé selon Höppler ; solution à 10% dans l'éthanol) et un degré de polymérisation Pw < 200, pouvant être obtenus par saponification d'un polymère d'ester de vinyle et acétalisation consécutive du poly(alcool vinylique) ainsi obtenu avec un ou plusieurs aldéhydes du groupe comprenant les aldéhydes aliphatiques et aromatiques comprenant 1 à 15 atomes de carbone, **caractérisés en ce qu'**un polymère d'ester de vinyle d'un ou de plusieurs monomères du groupe comprenant les esters vinyliques d'acides alkylcarboxyliques non ramifiés ou ramifiés comprenant 1 à 15 atomes de carbone, et le cas échéant d'un ou de plusieurs monomères du groupe comprenant les acides monocarboxyliques et dicarboxyliques éthyléniquement insaturés, les amides d'acides carboxyliques éthyléniquement insaturés et les nitriles d'acides carboxyliques éthyléniquement insaturés, les monoesters de l'acide fumarique et de l'acide maléique, les acides sulfoniques éthyléniquement insaturés et à chaque fois leurs sels, présentant une viscosité de solution de 1,0 à 1,6 mPa.s (DIN 53 015, procédé selon Höppler ; solution à 10% dans l'acétate d'éthyle) est saponifié, et la saponification est réalisée jusqu'à une teneur ≥ 50% en mole d'unités d'alcool vinylique et avec obtention d'un poly(alcool vinylique) présentant une viscosité de solution de 1,0 à 2,0 mPa.s (DIN 53 015, procédé selon Höppler ; solution à 4% dans l'eau).

2. Polyvinylacétals de bas poids moléculaire selon la revendication 1, **caractérisés en ce que** le polymère d'ester de vinyle contient 50 à 99,98% en poids d'ester de vinyle par rapport au poids total du polymère.

3. Polyvinylacétals de bas poids moléculaire selon la revendication 1 à 2, **caractérisés en ce que** le polymère d'ester de vinyle contient encore un ou plusieurs monomères du groupe comprenant les esters de l'acide méthacrylique et les esters de l'acide acrylique d'alcools comprenant 1 à 15 atomes de carbone, les oléfines, les diènes, les aromatiques de vinyle et les halogénures de vinyle, leur proportion étant calculée de telle manière que la proportion d'ester de vinyle dans le copolymère est ≥ 50% en mole.

4. Polyvinylacétals de bas poids moléculaire selon la revendication 1 à 3, **caractérisés en ce que** le polymère d'ester de vinyle contient encore un ou de plusieurs monomères du groupe comprenant les acides monocarboxyliques et dicarboxyliques éthyléniquement insaturés, les amides d'acides carboxyliques éthyléniquement insaturés et les nitriles d'acides carboxyliques éthyléniquement insaturés, les monoesters de l'acide fumarique et de l'acide maléique.

5. Polyvinylacétals de bas poids moléculaire selon la revendication 1 à 4, **caractérisés en ce que** la saponification est réalisée jusqu'à un degré d'hydrolyse de 70 à 90% en mole et une viscosité de solution de 1,0 à 2,0 mPa.s (DIN 53 015, procédé selon Höppler ; solution à 4% dans l'eau).

6. Polyvinylacétals de bas poids moléculaire selon la revendication 1 à 5, **caractérisés en ce qu'**on utilise pour l'acétalisation du butyraldéhyde, le cas échéant en mélange avec de l'acétaldéhyde.

7. Polyvinylacétals de bas poids moléculaire selon la revendication 1 à 6, **caractérisés en ce que** le degré d'acétalisation est de 1 à 80% en mole, le degré de polymérisation Pw < 175 et la viscosité de solution est de 2 à 10 mPa.s.

8. Procédé de préparation des polyvinylacétals de bas poids moléculaire selon la revendication 1 à 7, dans lequel
a) un polymère d'ester de vinyle d'un ou de plusieurs monomères du groupe comprenant les esters de vinyle d'acides alkylcarboxyliques non ramifiés ou ramifiés, comprenant 1 à 15 atomes de carbone, et le cas échéant d'un ou de plusieurs monomères du groupe comprenant les acides monocarboxyliques et dicarboxyliques éthyléniquement insaturés, les amides d'acides carboxyliques éthyléniquement insaturé et les nitriles d'acides carboxyliques éthyléniquement insaturés, les monoesters de l'acide fumarique et de l'acide maléique, les acides sulfoniques éthyléniquement insaturés et à chaque fois leurs sels, présentant une viscosité de solution de 1,0 à 1,6 mPa.s (DIN 53 015, procédé selon Höppler ; solution à 10% dans l'acétate d'éthyle), est saponifié, la saponification est réalisée jusqu'à une teneur ≥ 50% en mole d'unités d'alcool vinylique et avec obtention d'un poly(alcool vinylique) présentant une viscosité de solution de 1,0 à 2,0 mPa.s (DIN 53 015, procédé selon Höppler ; solution à 4% dans l'eau).
b) le poly(alcool vinylique) obtenu au point a) est acétalisé avec un ou plusieurs aldéhydes du groupe comprenant les aldéhydes aliphatiques et aromatiques comprenant 1 à 15 atomes de carbone jusqu'à un degré d'acétalisation de 1 à 80% en mole.

9. Utilisation des polyvinylacétals de bas poids moléculaire selon les revendications 1 à 7 dans des compositions d'encres pour imprimerie.

10. Utilisation selon la revendication 9, **caractérisée en ce que** la composition d'encres pour imprimerie contient 5 à 20% en poids de proportion de pigments, 5 à 15% en poids de liant à base de polyvinylacétal de bas poids moléculaire et des solvants ainsi que le cas échéant encore d'autres additifs.

11. Utilisation des polyvinylacétals de bas poids moléculaire selon les revendications 1 à 7 dans le verre de sécurité feuilleté, les composites de verre et les feuilles pour vitres.

12. Utilisation des polyvinylacétals de bas poids moléculaire selon les revendications 1 à 7 comme colloïde de protection pour des dispersions aqueuses, lors de la polymérisation en milieu aqueux et lors de la production de poudres de dispersion redispersibles dans l'eau.

13. Utilisation des polyvinylacétals de bas poids moléculaire selon les revendications 1 à 7 comme liant dans les laques à base aqueuse.

14. Utilisation des polyvinylacétals de bas poids moléculaire selon les revendications 1 à 7 comme liant dans les laques en poudre.

15. Utilisation des polyvinylacétals de bas poids moléculaire selon les revendications 1 à 7 comme liant dans les agents de protection contre la corrosion.

16. Utilisation des polyvinylacétals de bas poids moléculaire selon les revendications 1 à 7 comme liant pour les poudres de céramique et les poudres de métal.

17. Utilisation des polyvinylacétals de bas poids moléculaire selon les revendications 1 à 7 comme liant pour le revêtement interne de boîtes.
